(19) Europäisches Patentamt
European Patent Office
Office européen des brevets

(11) EP 4 776 372 A1

(12) **EUROPEAN PATENT APPLICATION**

(43) Date of publication:
**15.07.2026 Bulletin 2026/29**

(21) Application number: **25213292.3**

(22) Date of filing: **04.11.2025**

(51) International Patent Classification (IPC):
***H01M 10/0567*** *(2010.01)*

(52) Cooperative Patent Classification (CPC):
**H01M 10/0567; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.01.2025 KR 20250004306**

(71) Applicant: **SAMSUNG SDI CO., LTD.**
**Yongin-si, Gyeonggi-do 17084 (KR)**

(72) Inventors:
- **KIM, Sohee**
  **17084 Gyeonggi-do (KR)**
- **KIM, Sanghoon**
  **17084 Gyeonggi-do (KR)**
- **CHOI, Hyunbong**
  **17084 Gyeonggi-do (KR)**
- **PARK, Sangwoo**
  **17084 Gyeonggi-do (KR)**
- **PARK, Hongryeol**
  **17084 Gyeonggi-do (KR)**
- **YANG, Yeji**
  **17084 Gyeonggi-do (KR)**
- **JUN, Dasol**
  **17084 Gyeonggi-do (KR)**
- **JI, Woojung**
  **17084 Gyeonggi-do (KR)**
- **LIM, Seiyeon**
  **17084 Gyeonggi-do (KR)**
- **SHIN, Youngkyeong**
  **17084 Gyeonggi-do (KR)**

(74) Representative: **Michalski Hüttermann & Partner mbB**
**Kaistraße 16A**
**40221 Düsseldorf (DE)**

# (54) ELECTROLYTES FOR RECHARGEABLE LITHIUM BATTERIES AND RECHARGEABLE LITHIUM BATTERIES INCLUDING THE SAME

(57) Disclosed is an electrolyte for a rechargeable lithium battery, and a rechargeable lithium battery including the rechargeable lithium battery. The electrolyte for a rechargeable lithium battery includes a non-aqueous organic solvent, lithium salt, a first additive, and a second additive .

【FIG. 1】

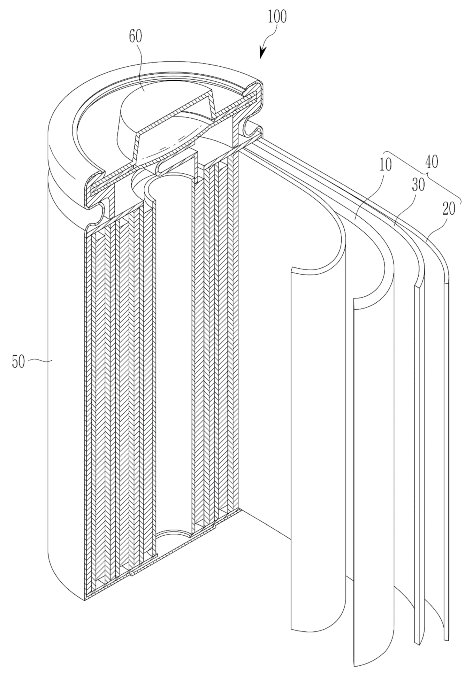


EP 4 776 372 A1

## Description

## BACKGROUND

### 1. Field

Electrolytes for rechargeable lithium batteries, and rechargeable lithium batteries including the rechargeable lithium batteries are disclosed.

### 2. Description of the Related Art

A rechargeable lithium battery may be recharged and has three or more times as high an energy density per unit weight as a conventional lead storage battery, nickel-cadmium battery, nickel hydrogen battery, nickel zinc battery and the like. A rechargeable lithium battery may also be charged at a high rate and thus, is commercially manufactured for, e.g., a laptop, a cell phone, an electric tool, an electric bike, and the like, and improving additional energy density may be advantageous.

A rechargeable lithium battery is manufactured by injecting an electrolyte into an electrode assembly, which includes a positive electrode including a positive electrode active material capable of intercalating/deintercalating lithium ions, and a negative electrode including a negative electrode active material capable of intercalating/deintercalating lithium ions.

However, as charging and discharging of rechargeable lithium batteries continues, transition metals are eluted from the positive electrode active material, which can be a major cause of deteriorating the performance of rechargeable lithium batteries. For example, transition metals eluted from the positive electrode active material may be reduced at the interface between the negative electrode and the electrolyte, weakening the solid-electrolyte interphase (SEI) film or forming dendrites.

This phenomenon may become more severe as the number of driving cycles of the rechargeable lithium battery increases and/or the ambient temperature during driving increases.

## SUMMARY

Some example embodiments improve performance of a rechargeable lithium battery, regardless of the number of driving cycles and/or the ambient temperature during driving.

Some example embodiments include an electrolyte for a rechargeable lithium battery, the electrolyte including a non-aqueous organic solvent, a lithium salt, an additive represented by Chemical Formula 1 below, and an additive represented by Chemical Formula 2 below:

Chemical Formula 1:

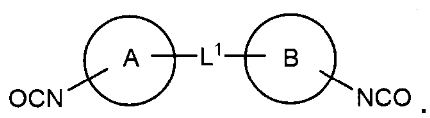

Chemical Formula 2:

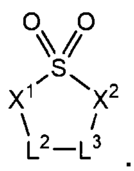

Some example embodiments include a rechargeable lithium battery including the electrolyte.

An electrolyte for a rechargeable lithium battery according to some example embodiments can reduce or minimize the negative effects caused by transition metals eluted from a positive electrode active material by protecting the surface of the positive electrode.

Accordingly, by using the electrolyte for a rechargeable lithium battery of some example embodiments, the performance of the rechargeable lithium battery can be improved regardless of the number of driving cycles and/or the

ambient temperature during driving.

## BRIEF DESCRIPTION OF THE DRAWINGS

FIGS. 1 to 4 are schematic views illustrating rechargeable lithium batteries according to some example embodiments.

## DETAILED DESCRIPTION

As used herein, when a specific definition is not otherwise provided, it is be understood that when an element such as a layer, film, region, or substrate is referred to as being "on" another element, the element can be directly on the other element, or intervening elements may also be present therebetween.

As used herein, when a specific definition is not otherwise provided, the singular may also include the plural. In addition, unless otherwise specified, "A or B" may indicate "including A, including B, or including A and B."

As used herein, "combination thereof" may indicate a mixture, a stack, a composite, a copolymer, an alloy, a blend, and a reaction product of constituents.

As used herein, when specific definition is not otherwise provided, "substituted" refers to replacement of at least one hydrogen atom of a compound by a substituent such as or including at least one of a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, when specific definition is not otherwise provided, "heterocycloalkyl group," "heterocycloalkenyl group," "heterocycloalkynyl group," and "heterocycloalkylene group" means that at least one heteroatom of N, O, S or P is present in the ring compound of cycloalkyl, cycloalkenyl, cycloalkynyl, and cycloalkylene, respectively.

In chemical formulas of the present specification, unless a specific definition is otherwise provided, hydrogen is bonded at the position when a chemical bond is not drawn where supposed to be given.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Electrolyte for Rechargeable Lithium Battery

Some example embodiments include an electrolyte for a rechargeable lithium battery including a non-aqueous organic solvent, a lithium salt; an additive represented by Chemical Formula 1 below, and an additive represented by Chemical Formula 2 below:

Chemical Formula 1:

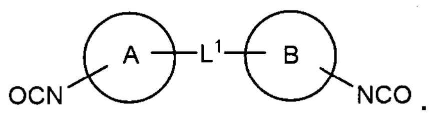

Chemical Formula 2:

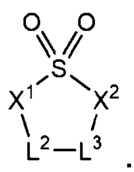

The additive represented by Chemical Formula 1 has a structure in which cyclic compounds (A and B) including an isocyanate (-NCO) group are linked by a linker ($L^1$), and the additive represented by Chemical Formula 2 has a structure of a cyclic sulfate compound.

Accordingly, the additive represented by Chemical Formula 1 and the additive represented by Chemical Formula 2 form a film on the surface of the negative electrode to protect the negative electrode, thereby reducing or minimizing the negative impact caused by the transition metal eluted from the positive electrode active material.
Accordingly, by using the electrolyte for a rechargeable lithium battery of some example embodiments, the performance of the rechargeable lithium battery may be improved regardless of the number of driving cycles and/or the ambient temperature during driving.
Hereinafter, an electrolyte for a rechargeable lithium battery according to some example embodiments is described in detail.

Additive

The description of Chemical Formula 1 is as follows.
A and B each independently is or includes a substituted or unsubstituted cycloalkyl ring having 1 to 30 carbon atoms or a substituted or unsubstituted aryl ring having 6 to 30 carbon atoms.
For example, both A and B may be or include a cyclopentyl ring or a cyclohexyl ring.
$L^1$ may be or include a substituted or unsubstituted alkylene group having 1 to 30 carbon atoms, or a substituted or unsubstituted arylene group having 6 to 30 carbon atoms.
For example, $L^1$ may be or include a carbon methylene group.
Chemical Formula 1 may be represented by Chemical Formula 1-1 or 1-2 below:

Chemical Formula 1-1:

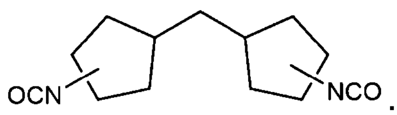

Chemical Formula 1-2:

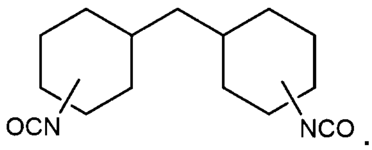

Representative examples of the additive represented by Chemical Formula 1 are as follows:

Chemical Formula 1-1-1:

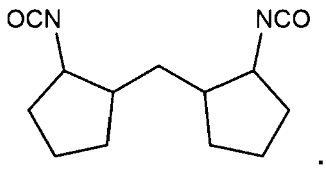

Chemical Formula 1-1-2:

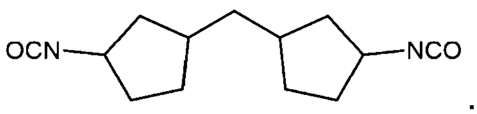

Chemical Formula 1-1-3:

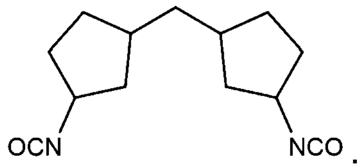

Chemical Formula 1-1-4:

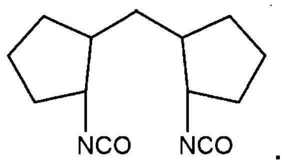

Chemical Formula 1-2-1:

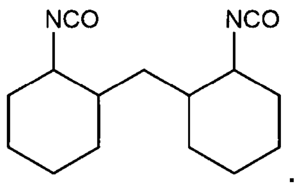

Chemical Formula 1-2-2:

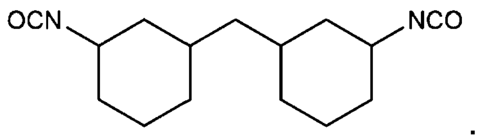

Chemical Formula 1-2-3:

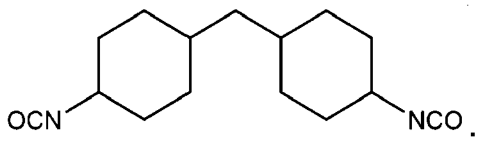

Chemical Formula 1-2-4:

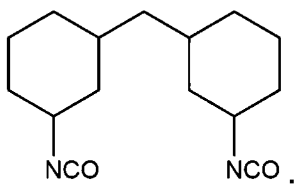

Chemical Formula 1-2-5:

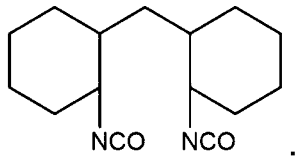

The description of Chemical Formula 2 is as follows.

$X^1$ and $X^2$ may each independently be or include O or S.

For example, both $X^1$ and $X^2$ may be or include O.

$L^2$ and $L^3$ may each independently be or include a single bond, a substituted or unsubstituted alkylene group having 1 to 30 carbon atoms, or a substituted or unsubstituted arylene group having 6 to 30 carbon atoms.

For example, at least one of $L^2$ and $L^3$ may be or include a methylene group, and the other may be or include a methylene group or an ethylene group.

Representative examples of the additive represented by Chemical Formula 2 are as follows:

Chemical Formula 2-1:

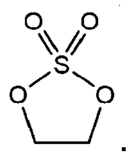

Chemical Formula 2-2:

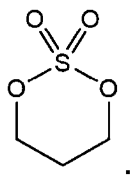

The additive represented by Chemical Formula 1 may be included in an amount in a range of ≥ 0.05 wt% to ≤ 10.0 wt%, ≥ 0.05 wt% to ≤ 3.0 wt%, or ≥ 0.4 wt% to ≤ 0.6 wt%, based on 100 wt% of the total amount of the electrolyte.

The additive represented by Chemical Formula 2 may be included in an amount in a range of ≥ 0.05 wt% to ≤ 1.0 wt%, ≥ 0.05 wt% to ≤ 3.0 wt%, or ≥ 0.1 wt% to ≤ 2.0 wt%, based on 100 wt% of the total amount of the electrolyte.

A weight ratio of the additive represented by Chemical Formula 1 to the additive represented by Chemical Formula 2 may be in a range about 10:1 to about 1:10, or about 5:1 to about 1:4.

When the above ranges are satisfied, the negative influence caused by transition metals eluted from the positive electrode active material may be reduced or minimized by effectively protecting the negative electrode surface.

Non-aqueous Organic Solvent

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, alcohol-based solvent, aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone. The alcohol-based solvent may include ethyl alcohol, isopropyl alcohol, and the like. The aprotic solvent may include at least one of nitriles such as R-CN

(wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and the like.

The non-aqueous organic solvent may be used alone or in combination of two or more solvents.

Additionally, when using a carbonate-based solvent, cyclic carbonate and chain carbonate can be mixed, and cyclic carbonate and chain carbonate may be mixed at a volume ratio in a range of about 1:1 to about 1:9.

For example, the non-aqueous organic solvent may include at least one of ethylene carbonate (EC), ethyl methyl carbonate (EMC), dimethyl carbonate (DMC), or a combination thereof.

The electrolyte may further include at least one of vinylethyl carbonate, vinylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, or a combination thereof as an additive.

Lithium Salt

The lithium salt dissolved in the organic solvent is configured to supply lithium ions in a battery, to enable an operation of a rechargeable lithium battery, and to improve transportation of the lithium ions between positive and negative electrodes. Examples of a lithium salt may include at least one or more of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$, where x and y are integers from 1 to 20, lithium trifluoromethane sulfonate, lithium tetrafluoroethanesulfonate, lithium difluorobis(oxalato)phosphate, (LiDFOB), and lithium bis(oxalato)borate (LiBOB).

A molar concentration of the lithium salt in the electrolyte may be in a range of ≥ 0.5 M to ≤ 3 M, ≥ 0.5 M to ≤ 2 M, or ≥ 1 M to ≤ 1.5 M.

**Rechargeable Lithium Battery**

Some example embodiments includes a rechargeable lithium battery including a positive electrode including a positive electrode active material, a negative electrode including a negative electrode active material, and an electrolyte according to the aforementioned example embodiments.

Accordingly, by using the electrolyte for a rechargeable lithium battery according to the above-described example embodiment, the performance of the rechargeable lithium battery may be improved regardless of the number of driving cycles and/or the ambient temperature during driving.

Hereinafter, any description overlapping with the above is omitted, and a rechargeable lithium battery according to some example embodiments is described in detail.

Positive Electrode Active Material

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof, may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. $Li_aA_{1-b}X_bO_{2-c}D_c$ ($0.90 \le a \le 1.8$, $0 \le b \le 0.5$, $0 \le c \le 0.05$); $Li_aMn_{2-b}X_bO_{4-c}D_c$ ($0.90 \le a \le 1.8$, $0 \le b \le 0.5$, $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, $0 < \alpha < 2$); $Li_aNi_bCo_cL^1_{d-}G_eO_2$ ($0.90 \le a \le 1.8$, $0 \le b \le 0.9$, $0 \le c \le 0.5$, $0 \le d \le 0.5$, $0 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $Li_{(3-f)}Fe_2(PO_4)_3$ ($0 \le f \le 2$); and $Li_aFePO_4$ ($0.90 \le a \le 1.8$).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: $Li_{a1}Ni_{x1}M^1_{y1}M^2_{z1}O_{2-b1}X_{b1}$.

In Chemical Formula 11, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, and $0 \leq b1 \leq 0.1$, $M^1$ and $M^2$ each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, $0.6 \leq x1 \leq 1$, $0 \leq y1 \leq 0.4$, and $0 \leq z1 \leq 0.4$, or $0.8 \leq x1 \leq 1$, $0 \leq y1 \leq 0.2$, and $0 \leq z1 \leq 0.2$.

Chemical Formula 12: $Li_{a2}Co_{x2}M^3_{y2}O_{2-b2}X_{b2}$.

In Chemical Formula 12, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, $M^3$ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: $Li_{a3}Fe_{x3}M^4_{y3}PO_{4-b3}X_{b3}$.

In Chemical Formula 13, $0.9 \leq a3 \leq 1.8$, $0.6 \leq x3 \leq 1$, $0 \leq y3 \leq 0.95$, and $0 \leq b3 \leq 0.1$, $M^4$ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: $Li_{a4}Ni_{x4}Mn_{y4}M^5_{z4}O_{2-b4}X_{b4}$.

In Chemical Formula 14, $0.9 \leq a4 \leq 1.8$, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^5$ is or includes one or more elements such as or including at least one of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which a nickel content may be greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of metal excluding lithium in the lithium transition metal composite oxide. The high nickel-based positive electrode active material may achieve high capacity, and may be applicable to high-capacity, high-density rechargeable lithium batteries.

For example, the positive electrode active material may be or include a lithium iron phosphate compound represented by Chemical Formula 13, and when used, the elution of iron, a type of transition metal, may be possible. Nonetheless, the electrolyte for a rechargeable lithium battery of one example embodiment can reduce or minimize a negative impact caused by iron eluted from the lithium iron phosphate-based compound represented by Chemical Formula 13 by protecting the negative electrode surface.

An amount of the positive electrode active material may be in a range of $\geq$ 90 wt% to $\leq$ 99.5 wt% based on 100 wt% of the positive electrode active material layer, and amounts of the binder and conductive material may be in a range of $\geq$ 0.5 wt% to $\leq$ 5 wt%, respectively, based on 100 wt% of the positive electrode active material layer.

## Conductive Material

The electrode active material layer may further include a conductive material.

The conductive material may provide electrode conductivity, and any electrically conductive material may be used as a conductive material unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

## Positive Electrode

The positive electrode for a rechargeable lithium battery may include a current collector and a positive electrode active material layer on the current collector. The positive electrode active material layer may include a positive electrode active material, and may further include a binder and/or a conductive material.

An amount of the positive electrode active material may be in a range of $\geq$ 90 wt% to $\leq$ 99.5 wt% based on 100 wt% of the positive electrode active material layer.

In some example embodiments, the positive electrode active material layer may further include a binder and a conductive material. Herein, the amount of each of the binder and the conductive material may be in a range of $\geq$ 0.5 wt% to $\leq$ 5 wt% based on 100 wt% of the positive electrode active material layer.

The binder attaches the positive electrode active material particles to each other, and attaches the positive

electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may impart conductivity (e.g., electrical conductivity) to the electrode. Any material that does not cause chemical change (e.g., does not cause an undesirable chemical change in the rechargeable lithium battery), and that conducts electrons, may be used in the battery. Examples of the conductive material may include a carbon-based material such as at least one of natural graphite, artificial graphite, carbon black, acetylene black, Ketjen black, a carbon fiber, a carbon nanofiber, and carbon nanotube; a metal-based material including at least one of copper, nickel, aluminum, silver, and the like, in the form of a metal powder or a metal fiber; a conductive polymer such as a polyphenylene derivative; or a mixture thereof.

The current collector may include Al, but is not limited thereto.

Negative Electrode Active Material

The negative electrode active material may be or include at least one of a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon or a combination thereof. The crystalline carbon may be or include graphite such as non-shaped, plate-shaped, flakeshaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy may include lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x \leq 2$), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, an Sn-based alloy, or a combination thereof.

The silicon-carbon composite may be or include a composite of silicon and amorphous carbon. According to some example embodiments, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

Negative Electrode

A negative electrode for a rechargeable lithium battery includes a current collector, and a negative electrode active material layer on the current collector. The negative electrode active material layer includes a negative electrode active material, and may further include a binder and/or a conductive material.

For example, the negative electrode active material layer may include about 90 wt% to ≤ 99 wt% of the negative electrode active material, ≥ 0.5 wt% to ≤ 5 wt% of the binder, and ≥ 0.5 wt% to ≤ 5 wt% of the conductive material.

The binder may attach the negative electrode active material particles to each other, and attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrilebutadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, the aqueous binder may further include a cellulose-based compound capable of imparting viscosity. The cellulose-based compound includes at least one or more of carboxylmethyl cellulose, hydroxypropylmethyl cellulose, methyl cellulose, or alkali metal salts thereof. The alkali metal may be or include at least one of Na, K, or Li.

The dry binder may be or include a polymer material capable of being fiberized, and may be or include, for example, at least one of polytetrafluoroethylene, polyvinylidene fluoride, polyvinylidene fluoridehexafluoropropylene copolymer, polyethylene oxide, or a combination thereof.

The conductive material is included to provide electrode conductivity, and any electrically conductive material may be used as a conductive material unless the electrically conductive material causes an adverse chemical change in the battery. Examples of the conductive material may be or include a carbon-based material such as at least one of natural graphite, artificial graphite, carbon black, acetylene black, ketjen black, a carbon fiber, a carbon nanofiber, a carbon nanotube, and the like; a metal-based material such as or including at least one of copper, nickel, aluminum silver, and the like in the form of a metal powder or a metal fiber; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof, but is not limited thereto.

Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/-polyethylene/polypropylene three-layer separator, and the like.

The separator may include a porous substrate and a coating layer including an organic material, an inorganic material, or a combination thereof, on one surface, or on both surfaces, of the porous substrate.

The porous substrate may be or include a polymer film formed of or including any one of a polymer, or a copolymer or mixture of two or more of polyolefin such as polyethylene or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenyleneoxide, a cyclic olefin copolymer, polyphenylenesulfide, polyethylenenaphthalate, a glass fiber, TEFLON (tetrafluoroethylene), and polytetrafluoroethylene.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Rechargeable Lithium Battery

The rechargeable lithium battery may be classified into cylindrical, prismatic, pouch, or coin-type batteries, and the like depending on their shape. FIGS. 1 to 4 are schematic views illustrating a rechargeable lithium battery according to an example embodiment. FIG. 1 shows a circular battery, FIG. 2 shows a prismatic battery, and FIGS. 3 and 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 sealing the case 50 as shown in FIG. 1. In addition, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a

negative electrode tab 72 illustrated in FIG. 3, the electrode tabs 70/71/72 forming an electrical path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Hereinafter, examples of the present disclosure and comparative examples are described. The examples below, however, are not in any sense to be interpreted as limiting the scope of the disclosure.

**Examples 1-1-1 to** 1-1-3

(1) Preparation of Electrolyte

An electrolyte was prepared by adding lithium salt ($LiPF_6$) and additives represented by Chemical Formulas 1-2-3 and 2-1 in a carbonate-based solvent of ethylene carbonate (EC) : ethylmethyl carbonate (EMC) : dimethyl carbonate (DMC) mixed in a volume ratio of 25:55:20.

Chemical Formula 1-2-3:

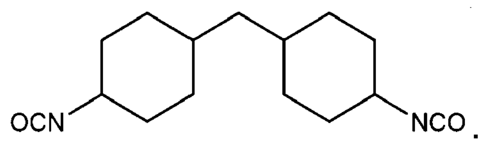

Chemical Formula 2-1:

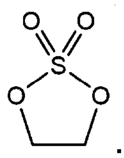

Herein, the lithium salt was added at a concentration of 1.15 M in the electrolyte, and each of the additive represented by Chemical Formula 1-2-3 and the additive represented by Chemical Formula 2-1 were added thereto in a content of 0.5 wt% and 0.5 wt%, respectively, based on 100 wt% of a total amount of the electrolyte.

(2) Manufacturing of Rechargeable Lithium Battery Cell

As a positive electrode current collector, an aluminum foil with a thickness of 10 μm was used.

$LiFePO_4$ (hereinafter, LFP, Example 1-1-1), $LiNi_{0.91}Co_{0.05}Al_{0.04}O_2$ (hereinafter, NCA, Example 1-1-2), or $LiNi_{0.8}Co_{0.1}Mn_{0.1}O_2$ (hereinafter, NCM, Example 1-1-3) as a positive electrode active material, polyvinylidene fluoride (PVDF) as a binder, carbon as a conductive material, and sulfolane (the compound represented by Chemical Formula 1-1) as an additive were mixed in a weight ratio of 92:4:3:1, and dispersed in N-methyl-2-pyrrolidone to prepare a positive electrode slurry. This slurry was coated to be 10 μm thick on the aluminum foil to form a positive electrode active material layer.

A negative electrode active material slurry was prepared by using artificial graphite as a negative electrode active material, and mixing the negative electrode active material : a styrene-butadiene rubber binder : carboxylmethyl cellulose in a weight ratio of 97:1:2 and dispersing the mixture in distilled water.

The negative electrode active material slurry was coated on a 10 μm-thick Cu foil, and dried and compressed to form a negative electrode active material layer.

The positive electrode and the negative electrode were assembled with a 10 μm-thick polyethylene separator to manufacture an electrode assembly, which was inserted into a case, and the electrolyte was injected thereinto, manufacturing a prismatic rechargeable lithium battery cell.

**Example 1-2**

An electrolyte and a rechargeable lithium battery cell were manufactured in the same manner as in Example 1-1, with a difference that the additives represented by Chemical Formulas 1-2-3 and 2-1 were used in respective amounts of 0.5 wt% and 0.1 wt% based on 100 wt% of the total amount of the electrolyte.

**Example 1-3**

An electrolyte and a rechargeable lithium battery cell were manufactured in the same manner as in Example 1-1, with a difference that the additives represented by Chemical Formulas 1-2-3 and 2-1 were used in respective amounts of 0.5 wt% and 0.3 wt% based on 100 wt% of the total amount of the electrolyte.

**Example 1-4**

An electrolyte and a rechargeable lithium battery cell were manufactured in the same manner as in Example 1-1, with a difference that the additives represented by Chemical Formulas 1-2-3 and 2-1 were used in respective amounts of 0.5 wt% and 1.0 wt% based on 100 wt% of the total amount of the electrolyte.

**Example 1-5**

An electrolyte and a rechargeable lithium battery cell were manufactured in the same manner as in Example 1-1, with a difference that the additives represented by Chemical Formulas 1-2-3 and 2-1 were used in respective amounts of 0.5 wt% and 2.0 wt% based on 100 wt% of the total amount of the electrolyte.

**Examples 2-1 to 2-5**

Electrolytes and rechargeable lithium battery cells were manufactured in the same manner as in Examples 1-1 to 2-5, with a difference that the additive represented by Chemical Formula 2-2 was used instead of the additive represented by Chemical Formula 2-1.

Chemical Formula 2-2:

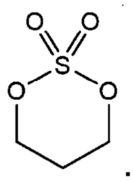

**Comparative Example 1 (Ref.)**

An electrolyte and a rechargeable lithium battery cell were manufactured in the same manner as in Example 1-1, with a difference that the additives were not added at all.

**Comparative Example 2**

An electrolyte and a rechargeable lithium battery cell were manufactured in the same manner as in Example 1-1, with a difference that the additive represented by Chemical Formula 1-2-3 alone was added, and the additive represented by Chemical Formula 2-1 was not added.

**Comparative Example 3**

An electrolyte and a rechargeable lithium battery cell were manufactured in the same manner as in Example 1-1, with a difference that the additive represented by Chemical Formula 1-2-3 was not added, and the additive represented by Chemical Formula 2-1 alone was added.

**Comparative Example 4**

An electrolyte and a rechargeable lithium battery cell were manufactured in the same manner as in Example 1-1, with a difference that the additive represented by Chemical Formula 1-2-3 was not added, and the additive represented by Chemical Formula 2-2 alone was added.
For reference, types and amounts of the additives used in the electrolytes of the examples and the comparative examples are summarized in Table 1 below. In Table 1, the amounts of the electrolyte additives used for each electrolyte were based on 100 wt% of the total amount of the electrolyte (solvent+lithium salt+additive).

Table 1:

| | Positive electrode active material | Electrolyte | | | |
|---|---|---|---|---|---|
| | | Chemical Formula 1 | | Chemical Formula 2 | |
| | | Type | Amount | Type | Amount |
| Example 1-1-1 | LFP | Chemical Formula 1-2-3 | 0.5 | Chemical Formula 2-1 | 0.5 |
| Example 1-1-2 | NCA | Chemical Formula 1-2-3 | 0.5 | Chemical Formula 2-1 | 0.5 |
| Example 1-1-3 | NCM | Chemical Formula 1-2-3 | 0.5 | Chemical Formula 2-1 | 0.5 |
| Example 1-2 | LFP | Chemical Formula 1-2-3 | 0.5 | Chemical Formula 2-1 | 0.1 |
| Example 1-3 | LFP | Chemical Formula 1-2-3 | 0.5 | Chemical Formula 2-1 | 0.3 |
| Example 1-4 | LFP | Chemical Formula 1-2-3 | 0.5 | Chemical Formula 2-1 | 1.0 |
| Example 1-5 | LFP | Chemical Formula 1-2-3 | 0.5 | Chemical Formula 2-1 | 2.0 |
| Example 2-1 | LFP | Chemical Formula 1-2-3 | 0.5 | Chemical Formula 2-2 | 0.5 |
| Example 2-1 | NCA | Chemical Formula 1-2-3 | 0.5 | Chemical Formula 2-2 | 0.5 |
| Example 2-1 | NCM | Chemical Formula 1-2-3 | 0.5 | Chemical Formula 2-2 | 0.5 |
| Example 2-2 | LFP | Chemical Formula 1-2-3 | 0.5 | Chemical Formula 2-2 | 0.1 |
| Example 2-3 | LFP | Chemical Formula 1-2-3 | 0.5 | Chemical Formula 2-2 | 0.3 |
| Example 2-4 | LFP | Chemical Formula 1-2-3 | 0.5 | Chemical Formula 2-2 | 1.0 |
| Example 2-5 | LFP | Chemical Formula 1-2-3 | 0.5 | Chemical Formula 2-2 | 2.0 |
| Comparative Example 1 (Ref.) | LFP | - | - | - | - |
| Comparative Example 2 | LFP | Chemical Formula 1-2-3 | 0.5 | - | - |
| Comparative Example 3 | LFP | - | - | Chemical Formula 2-1 | 0.5 |
| Comparative Example 4 | LFP | - | - | Chemical Formula 2-2 | 0.5 |

**Evaluation Example 1: Temperature-dependent Cycle-life Characteristics (capacity retention rate)**

The rechargeable lithium battery cells of the examples and the comparative examples were charged and discharged 200 times under the conditions of 0.33 C charge (CC/CV, 3.65 V, 0.05 C cut-off) /1.0 C discharge (CC, 2.8 V cut-off) at 25 °C or 45 °C to calculate a capacity retention rate according to Equation 1 below.

Capacity retention rate [%] = (Discharge capacity after 200 cycles/ Discharge capacity after 1$^{st}$ cycle) * 100. Equation 1:

:Table 2:

| | Positive electrode active material | Room temperature cycle-life (@25 °C) | High temperature cycle-life (@45 °C) |
|---|---|---|---|
| | | Capacity retention rate (%) | Capacity retention rate (%) |
| Example 1-1-1 | LFP | 97.1 | 86.3 |
| Example 1-1-2 | NCA | 82.3 | 74.2 |
| Example 1-1-3 | NCM | 78.9 | 72.5 |
| Example 1-2 | LFP | 89.2 | 78.2 |
| Example 1-3 | LFP | 93.9 | 81.3 |
| Example 1-4 | LFP | 96.3 | 83.5 |
| Example 1-5 | LFP | 95.8 | 82.3 |
| Example 2-1 | LFP | 96.6 | 85.4 |
| Example 2-1 | NCA | 81.2 | 72.8 |
| Example 2-1 | NCM | 78.6 | 71.0 |
| Example 2-2 | LFP | 88.0 | 77.8 |
| Example 2-3 | LFP | 91.2 | 79.9 |
| Example 2-4 | LFP | 94.8 | 83.1 |
| Example 2-5 | LFP | 94.5 | 81.3 |
| Comparative Example 1 (Ref.) | LFP | 73.0 | 68.1 |
| Comparative Example 2 | LFP | 84.6 | 77.3 |
| Comparative Example 3 | LFP | 84.1 | 76.8 |
| Comparative Example 4 | LFP | 83.5 | 74.4 |

**Evaluation Example 2: High-temperature Storage Characteristics (capacity retention rate/capacity recovery rate/DC-IR change rate)**

The rechargeable lithium battery cells of the examples and the comparative examples were charged and discharged once at 0.33 C to measure charge and discharge capacity (before high-temperature storage).

In addition, the rechargeable lithium battery cells of the examples and the comparative examples were charged to a state of charge (SOC) 100% (a state of being charged to 100% of charge capacity based on 100% of total battery charge capacity) and stored at 60 °C for 30 days, and then discharged to 3.0 V under the constant current condition of 0.33 C to measure initial discharge capacity.

The cells were recharged to 4.3 V at the constant current of 0.33 C and cut-off at a current of 0.02 C under constant voltage condition, and then discharged to 3.0 V at 0.33 C to measure first and second discharge capacity. A ratio of the first discharge capacity to the initial discharge capacity as a capacity retention rate, and a ratio of the second discharge capacity to the initial discharge capacity as a capacity recovery rate (recovery capacity) were calculated.

After measuring initial DC internal resistance (DC-IR) by $\Delta V/\Delta I$ (voltage change/current change) of the rechargeable lithium battery cells according to the examples and the comparative examples, the cells, of which a maximum energy state was made into a full-charge state (SOC 100%), and which were stored in this state at a high temperature (60 °C) for 30 days, were measured with respect to DC resistance to calculate a DC-IR change rate (%) according to Equation 3 below, and the results are shown in Tables 2 and 3.

Equation 3:

$$\text{DC-IR change rate} = (\text{DC-IR after 60 days}/\text{Initial DC-IR}) * 100$$

Table 3:

| | Positive electrode active material | High-temperature storage (@60 °C, 30 Days) | | |
|---|---|---|---|---|
| | | Retention (%) | Recovery (%) | DC-IR change rate (%) |
| Example 1-1-1 | LFP | 95.3 | 96.2 | 117 |
| Example 1-2 | LFP | 85.6 | 86.5 | 128 |
| Example 1-3 | LFP | 92.8 | 93.4 | 123 |
| Example 1-4 | LFP | 94.8 | 95.3 | 126 |
| Example 1-5 | LFP | 92.2 | 96.3 | 125 |
| Example 2-1 | LFP | 93.5 | 94.8 | 115 |
| Example 2-2 | LFP | 84.5 | 86.2 | 127 |
| Example 2-3 | LFP | 90.9 | 92.5 | 121 |
| Example 2-4 | LFP | 92.8 | 93.3 | 125 |
| Example 2-5 | LFP | 91.3 | 92.6 | 128 |
| Comparative Example 1 (Ref.) | LFP | 74.6 | 78.5 | 149 |
| Comparative Example 2 | LFP | 82.3 | 84.1 | 132 |
| Comparative Example 3 | LFP | 81.6 | 83.3 | 140 |
| Comparative Example 4 | LFP | 80.1 | 82.3 | 138 |

In summary of the results, the electrolyte for a rechargeable lithium battery according to some example embodiments, which were represented by the examples, was confirmed to protect the surface of a negative electrode and thus reduce or minimize negative impacts caused by a transition metal eluted form a positive electrode active material.

Accordingly, the electrolyte for a rechargeable lithium battery according to some example embodiments was confirmed to improve performance of the rechargeable lithium battery regardless of the number of driving cycles and/or an ambient temperature during the driving.

While this disclosure has been described in connection with what is presently considered to be practical example embodiments, it is to be understood that the disclosure is not limited to the disclosed embodiments, but, on the contrary, is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

**1.** An electrolyte for a rechargeable lithium battery (100), the electrolyte comprising:

a non-aqueous organic solvent;
a lithium salt;

an additive represented by Chemical Formula 1; and
an additive represented by Chemical Formula 2:

Chemical Formula 1:

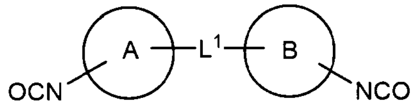

wherein:

A and B each independently comprises a substituted or unsubstituted cycloalkyl ring having 1 to 30 carbon atoms or a substituted or unsubstituted aryl ring having 6 to 30 carbon atoms; and
$L^1$ comprises a substituted or unsubstituted alkylene group having 1 to 30 carbon atoms, or a substituted or unsubstituted arylene group having 6 to 30 carbon atoms;

Chemical Formula 2:

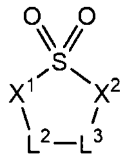

wherein:

$X^1$ and $X^2$ each independently comprises O or S; and
$L^2$ and $L^3$ each independently comprises a single bond, a substituted or unsubstituted alkylene group having 1 to 30 carbon atoms, or a substituted or unsubstituted arylene group having 6 to 30 carbon atoms.

**2.** The electrolyte as claimed in claim 1, wherein Chemical Formula 1 is represented by one of Chemical Formula 1-1 and Chemical Formula 1-2:

Chemical Formula 1-1:

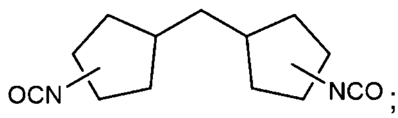

and

Chemical Formula 1-2:

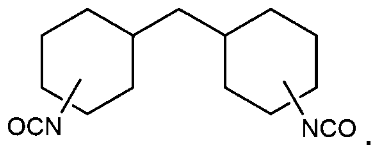

**3.** The electrolyte as claimed in claim 1 or 2, wherein Chemical Formula 1 is one of the following chemical formulas:

Chemical Formula 1-1-1:

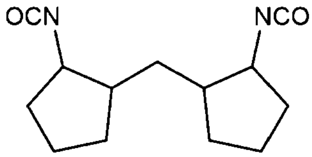

;

Chemical Formula 1-1-2:

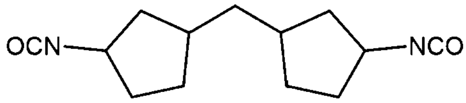

;

Chemical Formula 1-1-3:

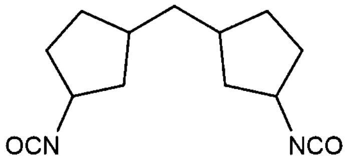

;

Chemical Formula 1-1-4:

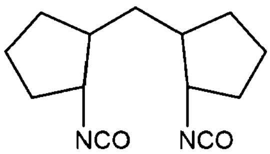

;

Chemical Formula 1-2-1:

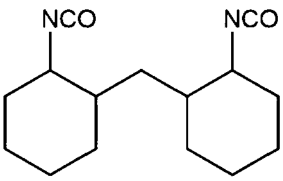

;

Chemical Formula 1-2-2:

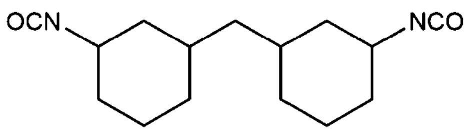

;

Chemical Formula 1-2-3:

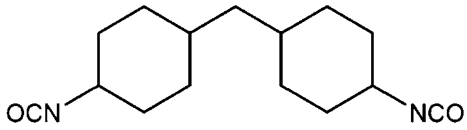

;

Chemical Formula 1-2-4:

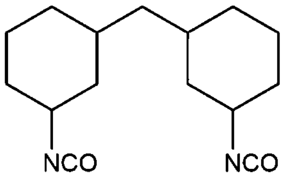

; and

Chemical Formula 1-2-5:

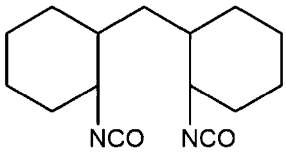

.

**4.** The electrolyte as claimed in any one of claims 1 to 3, wherein Chemical Formula 2 is represented by one of Chemical Formula 2-1 and Chemical Formula 2-2:

Chemical Formula 2-1:

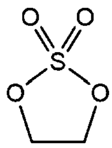

; and

Chemical Formula 2-2:

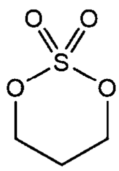

.

**5.** The electrolyte as claimed in any one of claims 1 to 4, wherein the additive represented by Chemical Formula 1 is included in an amount in a range of ≥ 0.05 wt% to ≤ 10.0 wt% based on 100 wt% of a total amount of the electrolyte.

**6.** The electrolyte as claimed in any one of claims 1 to 5, wherein the additive represented by Chemical Formula 2 is included in an amount in a range of ≥ 0.05 wt% to ≤ 10.0 wt% based on 100 wt% of a total amount of the electrolyte.

**7.** The electrolyte as claimed in any one of claims 1 to 6, wherein a weight ratio of the additive represented by Chemical Formula 1 to the additive represented by Chemical Formula 2 is in a range of about 10:1 to about 1:10.

**8.** The electrolyte as claimed in any one of claims 1 to 7, wherein the non-aqueous organic solvent comprises a carbonate-based non-aqueous organic solvent.

**9.** The electrolyte as claimed in any one of claims 1 to 8, wherein the non-aqueous organic solvent comprises a carbonate-based non-aqueous organic solvent, and wherein the carbonate-based non-aqueous organic solvent comprises at least one of ethylene carbonate (EC), ethylmethyl carbonate (EMC), dimethyl carbonate (DMC), and a combination thereof.

**10.** A rechargeable lithium battery (100), comprising:

a positive electrode (10) comprising a positive electrode active material;
a negative electrode (20) comprising a negative electrode active material, and
the electrolyte as claimed in any one of claims 1 to 9.

**11.** The rechargeable lithium battery (100) as claimed in claim 10, wherein the positive electrode active material comprises a lithium iron phosphate-based compound.

**12.** The rechargeable lithium battery (100) as claimed in claim 10 or 11, wherein the positive electrode active material comprises a lithium iron phosphate-based compound, and wherein

the lithium iron phosphate-based compound is represented by Chemical Formula 13:

Chemical Formula 13: $Li_{a3}Fe_{x3}M^4_{y3}PO_{4-b3}X_{b3}$

wherein $0.9 \leq a3 \leq 1.8$, $0.6 \leq x3 \leq 1$, $0 \leq y3 \leq 0.95$, and $0 \leq b3 \leq 0.1$, $M^4$ comprises one or more of Al, B, Ba, Ca, Ce, Co, Cr, Cu, Mg, Mn, Mo, Ni, Se, Si, Sn, Sr, Ti, V, W, Y, Zn, and Zr, and X comprises one or more of F, P, and S.

【FIG. 1】

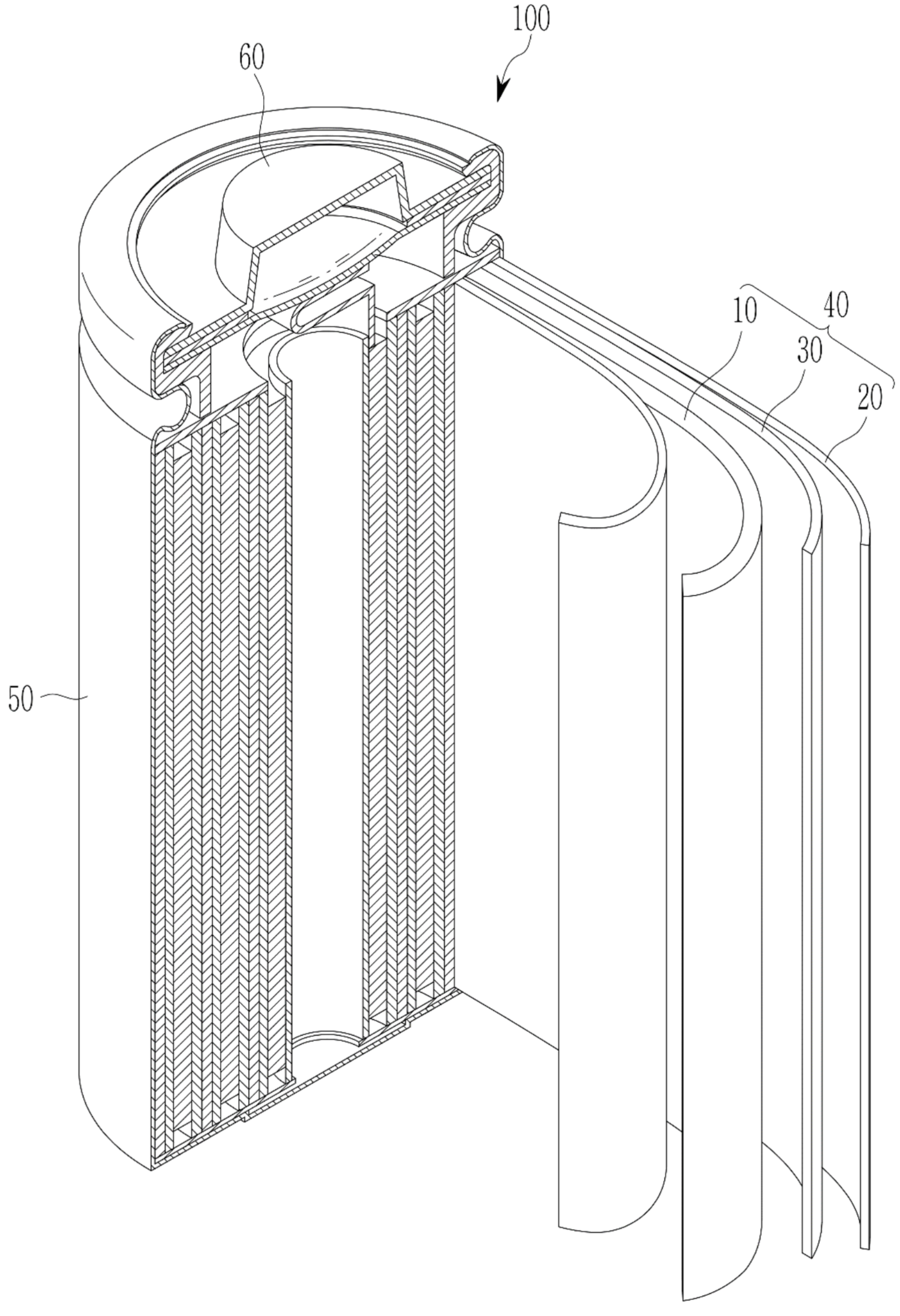

【FIG. 2】

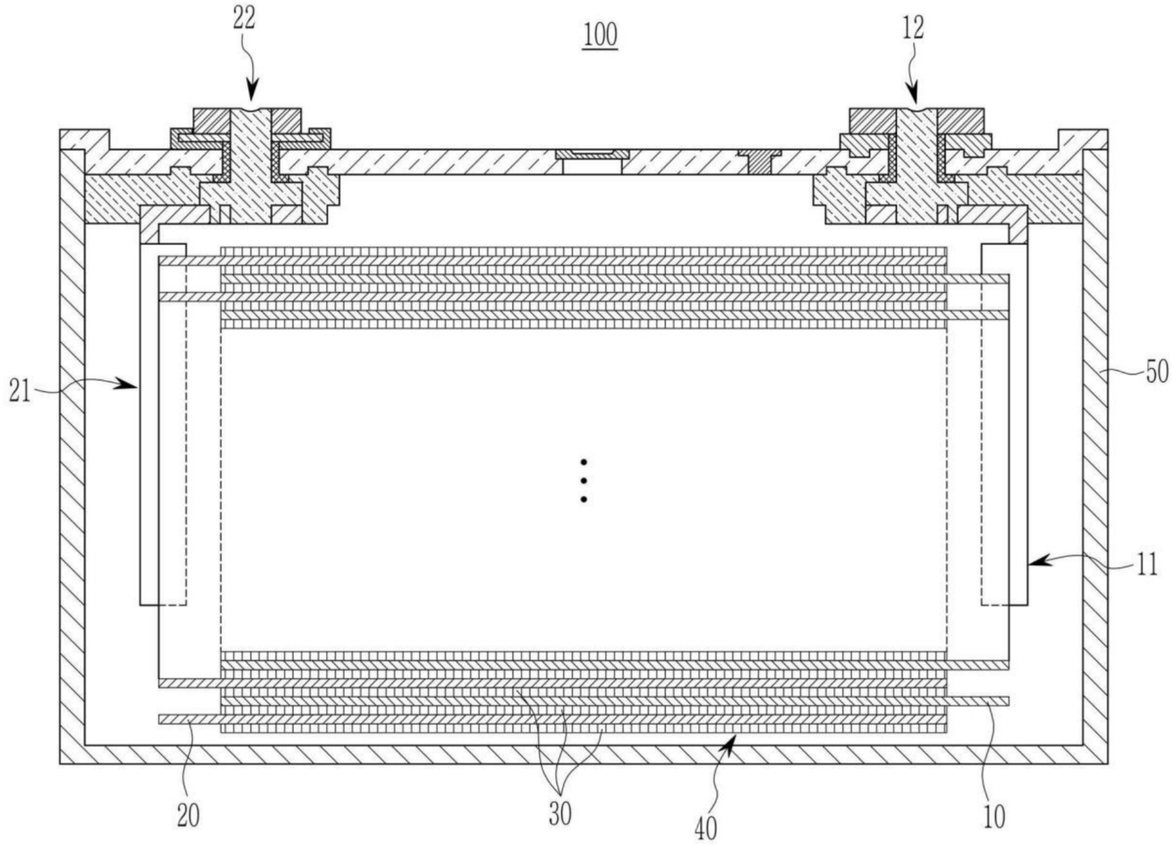

【FIG. 3】

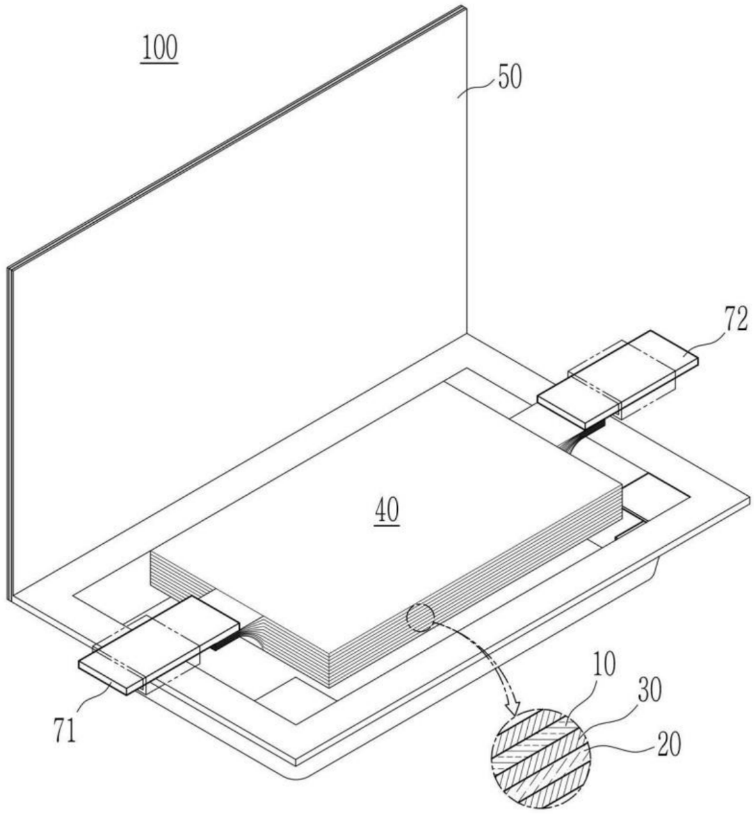

【FIG. 4】

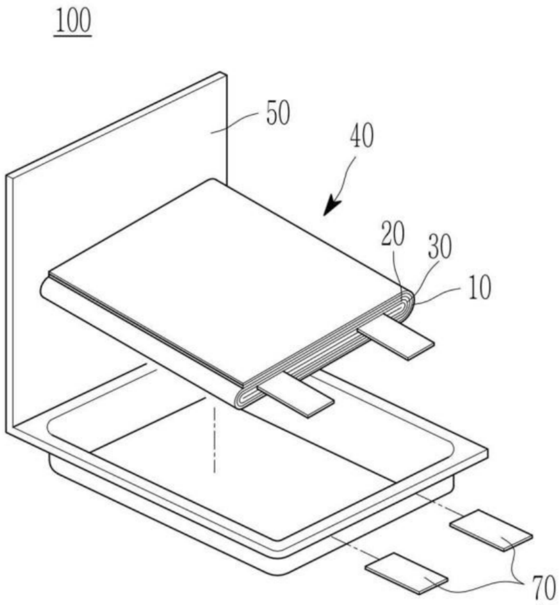

Europäisches Patentamt
European Patent Office
Office européen des brevets

# EUROPEAN SEARCH REPORT

Application Number
EP 25 21 3292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/402653 A1 (QIAN YUNXIAN [CN] ET AL) 14 December 2023 (2023-12-14) * Embodiment 16; paragraphs [0001], [0021], [0036], [0040], [0065], [0075]; table 1 * ----- | 1-12 | INV. H01M10/0567 |
| X | JP 2021 119560 A (MITSUBISHI CHEM CORP; MU IONIC SOLUTIONS CORP) 12 August 2021 (2021-08-12) * the whole document * ----- | 1-6,8-11 | |

TECHNICAL FIELDS SEARCHED (IPC)
H01M

The present search report has been drawn up for all claims

1

| Place of search | Date of completion of the search | Examiner |
|---|---|---|
| The Hague | 15 April 2026 | Suárez Ramón, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 21 3292

This annex lists the patent family members relating to the patent documents cited in the above-mentioned European search report. The members are as contained in the European Patent Office EDP file on
The European Patent Office is in no way liable for these particulars which are merely given for the purpose of information.

15-04-2026

| Patent document cited in search report | Publication date | Patent family member(s) | Publication date |
|---|---|---|---|
| US 2023402653 A1 | 14-12-2023 | CN 114583242 A | 03-06-2022 |
| | | EP 4254582 A1 | 04-10-2023 |
| | | US 2023402653 A1 | 14-12-2023 |
| | | WO 2022111346 A1 | 02-06-2022 |
| JP 2021119560 A | 12-08-2021 | JP 7579714 B2 | 08-11-2024 |
| | | JP 2021119560 A | 12-08-2021 |

EPO FORM P0459

For more details about this annex : see Official Journal of the European Patent Office, No. 12/82